# EUROPEAN PATENT APPLICATION

(11) **EP 4 609 969 A1**
(43) Date of publication of application: **03.09.2025**
(21) Application number: 23882218.3
(22) Date of filing: 25.08.2023
(51) Int. Cl.: B22F 3/11, B22F 1/00, C22C 1/08, C22C 14/00, H01B 5/02

(54) **TITANIUM POROUS BODY**

(30) Priority: 28.10.2022 JP 2022173590
(71) Applicant: Toho Titanium CO., LTD., Chigasaki-shi Kanagawa 253-8510 (JP)
(72) Inventor: INOUE,Yosuke, Chigasaki-shi, Kanagawa 253-8510 (JP)
(74) Representative: Mewburn Ellis LLP
(86) International application number: PCT/JP2023/030787
(87) International publication number: WO 2024/090003

(57) **Abstract**

The titanium porous body according to this invention has a thickness of 80 µm or more, is sheet-shaped, and has a peak pore diameter of 6.5 µm or less at a highest peak in a pore diameter distribution showing a relationship between a pore diameter and a volume, wherein an I value is 4.0 or more, as determined from an air permeability, electrical conductivity, and the peak pore diameter by the following equation (1): I = [air permeability (µm/Pa·s) x electrical conductivity (kS/cm)]/[peak pore diameter (µm)]².

## Description

### [Technical Field]

The present invention relates to a titanium porous body.

### [Background Art]

Metal porous bodies such as titanium porous bodies, which are produced by sintering powders or fibers made of metal such as titanium or the like, are described in, for example, Patent Literatures 1 to 3, and are used for electrodes, filters or other various applications.

Patent Literature 1 describes "a titanium sintered filter, wherein it has a thickness of 0.5 mm or less, an area of 200 cm² or more, and a tensile strength of 150 MPa or more. As a method for producing the "titanium sintered filter", Patent Literature 1 describes "sintering titanium gas-atomized powder to form a porous plate material, and rolling the porous plate material.

Patent Literature 2 describes a "porous sintered metal, wherein it has a thickness of 5 to 30 um, a porosity of 25 to 70% and an average pore diameter of 0.2 to 40 µm, and a large number of pores are through holes isotropically communicated with one another". Also, Patent Literature 3 provides "an inexpensive method for producing a porous titanium thin film having a thickness of 40 µm or less and a porosity of 1 to 65%", and proposes "a method for producing a porous titanium thin film having a thickness of 40 µm or less and a porosity of 1 to 65% by a process comprising the following steps (a), (b), (c), and (d):
(a) a formed body producing step of coating a substrate with a paste composition containing titanium raw materials including hydrogenated titanium powder or dehydrogenated titanium powder, a binder component, and a solvent component to form a film, and then drying it by volatilizing the solvent component to obtain a dried formed body; (b) a releasing step of releasing the dried formed body from the substrate; (c) a binder removal step of heating the released, dried formed body to remove the binder component; and (d) a sintering step of sintering the dried formed body after the binder removal at 700°C to 1100°C to obtain a porous titanium thin film".

### [Citation List]

### Patent Literatures

[PTL 1] Japanese Patent Application Publication No. 2005-324153 A
[PTL 2] Japanese Patent Application Publication No. 2013-82990 A
[PTL 3] Japanese Patent Application Publication No. 2014-65968 A

### [Summary of Invention]

### [Technical Problem]

By the way, a titanium porous body has air and liquid permeability due to its numerous pores, and electrical conductivity, as well as high corrosion resistance due to formation of a passive film on its surface. Therefore, the use of the titanium porous body as a porous transport layer (PTL) in an environment where corrosion may occur, for example, in a PEM water electrolytic device, is under consideration. Such applications may require thicker titanium porous bodies than those described in Patent Literatures 2 and 3.

When the titanium porous body is used as a porous transport layer in the PEM water electrolytic device, the titanium porous body may be pressed against and incorporated into the electrolyte membrane side. In this case, if the pores of the titanium porous body are large, the electrolyte membrane pressed against the titanium porous body is deformed and its surface partially enters the pores of the titanium porous body, thereby causing damage to the electrolyte membrane surface. Therefore, from the viewpoint of suppressing the generation of damage to the electrolyte membrane, a titanium porous body having a somewhat small pore size is desirable.

On the other hand, the small pores of the titanium porous body cause a decrease of air or liquid permeability, and can also affect electrical conductivity. Therefore, simply reducing the pore size of the titanium porous body will not make it suitable for a given application, such as the porous transport layer in the PEM water electrolytic device as described above.

An object of this invention is to provide a titanium porous body that has pores each having an appropriate size and can exhibit improved air permeability or liquid permeability and desirable electrical conductivity while suppressing the generation of damage to the surface of electrolyte membranes and the like.

### [Solution to Problem]

The titanium porous body according to this invention has a thickness of 80 µm or more, is sheet-shaped, and has a peak pore diameter of 6.5 µm or less at a highest peak in a pore diameter distribution showing a relationship between a pore diameter and a volume, wherein an I value is 4.0 or more, as determined from an air permeability, electrical conductivity, and the peak pore diameter by the following I =[air permeability (µm/Pa·s) x electrical conductivity (kS/cm)]/[peak pore diameter (µm)]2.

The peak pore diameter is preferably 1.5 µm or more and 6.5 µm or less.

The thickness may be 80 µm or more and 400 µm or less.

The titanium content may be 97% by mass or more, and the oxygen content may be 0.6% by mass or more and 2.0% by mass or less. The titanium content is preferably 98% by mass or more. The oxygen content is preferably 0.9% by mass or more and 2.0% by mass or less. The thickness is preferably 100 µm or more and 350 µm or less. The peak pore diameter is preferably 2.5 µm or more and 5.5 µm or less.

### [Advantageous Effects of Invention]

The titanium porous body according to this invention has pores each having an appropriate size and can exhibit improved air permeability and liquid permeability and desirable electrical conductivity while suppressing the generation of damage to the surface of the electrolyte membrane and the like.

### [Brief Description of Drawings]

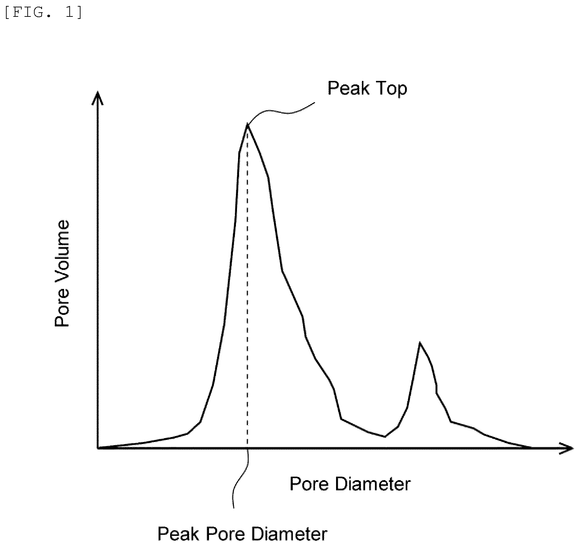

[FIG. 1] FIG.1 is a graph showing an example of a pore size distribution of a titanium porous body.

### [Description of Embodiments]

Embodiments of the present invention will be described in detail below.

A titanium porous body according to an embodiment of this invention is in sheet-shaped, and has a thickness of 80 µm or more. The titanium porous body has a peak pore diameter of 6.5 µm or less for the highest peak in a pore diameter distribution showing a relationship between a pore diameter and a volume. The titanium porous body has an I value of 4.0 or more, as determined from an air permeability, electrical conductivity, and the peak pore diameter described above, by the following equation (1): I =[air permeability (µm/Pa·s) x electrical conductivity (kS/cm)] / [peak pore diameter (µm)]².

To produce such a titanium porous body, for example, a paste that contains titanium powder, an organic binder, and an organic solvent, but does not contain water and a foaming agent, can be applied to a substrate, which is then dried, binder-removed, and sintered in this order. As titanium powder, it is preferable to use pulverized powder having a certain particle size, such as hydrogenated-dehydrogenated titanium powder (so-called HDH powder), rather than atomized powder. It is also suitable to mix titanium powder, the organic binder, the organic solvent and the like to increase the viscosity of the resulting paste to some degree. As a result, the peak pore diameter and/or the I value can be easily controlled to certain ranges for the titanium porous body having a higher thickness to some extent. If the mixing time is short or otherwise improperly produced, the dissolution of the organic binder in the organic solvent may be insufficient, resulting in a low viscosity paste. In such cases, the peak pore diameter tends to be increased.

### (Composition)

The titanium porous body is made of titanium. If it is made of titanium, a titanium porous body having high electrical conductivity can be obtained with a certain relative density. The titanium porous body preferably has a titanium content of 97% by mass or more, or preferably 98% by mass or more. The upper limit of the titanium content may be, for example, 99.8% by mass or less, or 99% by mass or less, although not particularly limited thereto. The titanium content means the purity of titanium determined by considering not only metallic components but also impurities in gaseous components such as oxygen. That is, the total content of impurities, including metallic and gaseous components, can be subtracted from 100% by mass to obtain the purity of titanium.

The titanium porous body may contain Fe as an impurity, with the Fe content of 0.25% by mass or less, for example. The titanium porous body may also contain Ni, Cr, Al, Cu, Zn, and Sn as unavoidable impurities resulting from the production process, for example. It is suitable that the content of each of Ni, Cr, Al, Cu, Zn, and Sn is lower than 0.10% by mass, and the total content thereof is preferably lower than 0.30% by mass.

It is preferable that the titanium porous body as described above has an oxygen content of 0.6% by mass or more and 2.0% by mass or less. If the oxygen content is 0.6% by mass or more, the good air permeability is easily maintained even if it is compressed and used. Furthermore, if the oxygen content is 2.0% by mass or less, the titanium porous body is prevented from becoming more brittle, so that it is difficult to be broken during handling. The oxygen content may be 0.9% by mass or more and 2.0% by mass or less. The oxygen content can be measured by an inert gas fusion-infrared absorption method.

The titanium porous body may have a purity corresponding to pure titanium types 1-4 in JIS H 4600 (2012), typically type 1 or 2, except for the oxygen content.

### (Thickness)

The sheet-shaped titanium porous body has a thickness of 80 µm or more, for example, 80 µm or more and 400 µm or less. For example, such a somewhat thick titanium porous body may be required for the porous transport layer of the PEM water electrolytic device. If the thickness is too thin, the control to the predetermined peak pore diameter as described below may be difficult. On the other hand, if the thickness is too thick, the PEM water electrolytic device may become larger. The thickness of the titanium porous body may be 350 µm or less, for example even 300 µm or less. The thickness of the titanium porous body may be 100 µm or more, 130 µm or more, or 160 µm or more.

The thickness is measured at five points in total: four at the periphery and one at the center of the titanium porous body, using a digital thickness gage having a flat measuring element of 10 mm in diameter and a measurement accuracy of 0.001 to 0.01 mm, such as Mitutoyo's digital thickness gage (Model No. 547-321), for example. An average of these measurements is used as an average value. If the titanium porous body in the form of the sheet is rectangular in the planar view, the above four points of the periphery should be the four points of the four corners.

It should be noted that the term "form of a sheet" for the titanium porous body means a plate shape or a foil shape having a smaller thickness with respect to planar view dimensions, and there is no particular limitation on the shape in the planar view.

### (Peak Pore Diameter)

The titanium porous body has numerous pores. The diameter and volume of each of those pores can be measured by the mercury intrusion method, which provides a pore size distribution showing a relationship between the diameter and the volume of each pore. The mercury intrusion method can be performed using a Micromeritix Autopore IV 9500. In this case, the measurement can be performed for 0.35 to 0.50 g of porous titanium sample under the conditions where the mercury intrusion pressure is 14 to 227 MPa, the measurement mode is a pressure increasing process, the measurement cell volume is 3.9 cm³, the mercury contact angle is 141.3°, and the mercury surface tension is 484 dyn/cm. The measurement results can be represented by a graph with the pore diameter on the horizontal axis and the pore volume on the vertical axis, as illustrated in FIG. **1****.**

At least one peak appears in the pore size distribution of the titanium porous body. When multiple peaks exist in the pore size distribution, the diameter of the pore at the peak top that is the highest peak height is referred to herein as the peak pore diameter.

In the titanium porous body, the peak pore diameter is 6.5 µm or less. If the peak pore diameter is higher than 6.5 µm, for example, damage may be generated when the titanium porous body is pressed against the surface of the electrolyte membrane when it is used as the porous transport layer in the PEM water electrolytic device. The peak pore diameter is preferably 5.5 µm or less, and even 4.5 µm or less. When an appropriate paste is used during the production of the titanium porous body, the volume and the diameter of each of the pores tend to be uniform throughout the titanium porous body and the peak pore diameter tends to be smaller. However, if the peak pore diameter is too small, the air permeability or liquid permeability of the titanium porous body will decrease. Therefore, the peak pore diameter is preferably **1.5** µm or more, and even more preferably **2.5** µm or more.

The titanium porous body has a three-dimensional network structure in which the powders are bonded together and pores are formed between them. In many cases, the interior of the skeleton of the titanium porous body, which is composed of powders bonded to each other, is solid rather than hollow.

### (I Value)

As described above, the titanium porous body has improved air permeability and required electrical conductivity, in addition to being able to suppress the generation of damage to the electrolyte membrane in the PEM water electrolytic device, for example.

More specifically, the titanium porous body has an I value of 4.0 or more, as determined by the equation (1): I =[air permeability (µm/Pa·s) x electrical conductivity (kS/cm)] /[peak pore diameter (µm)]². Even if the titanium porous body has the relatively small peak pore diameter as described above, it can exhibit improved air permeability and higher electrical conductivity if the I value is 4.0 **or** more. In general, the titanium porous body with improved air permeability also have improved performance in terms of liquid permeability.

The I value is preferably 5.0 or more, and more preferably 6.0 or more, and even more preferably 7.0 or more, and especially 8.0 or more. A higher I value is preferred, but it may be 15.0 or less, for example.

In the above equation (1), the air permeability is measured by a Gurley-type densometer in accordance with ISO-5636. However, the vent size during measurement of the air permeability should be 6 mm, rather than 22 mm. The electrical conductivity is measured by the four-probe method using low-resistivity meter Loresta GP MCP-T610 from Mitsubishi Analytech and the corresponding probe checker MCP-TRPS RMH311. For example, the air permeability may be in the range of 5 µm/Pa · s to 100 µm/Pa · s, and the electrical conductivity may be in the range of 3.0 kS/cm to 7.0 kS/cm, but as long as the I value is 4.0 or more, those individual values of the air permeability and the electrical conductivity are not required.

### (Use)

The titanium porous body as described above can be used for, in particular, a porous transport layer (PTL) in a PEM water electrolytic device. The PEM water electrolytic device may include: an anode and a cathode; an electrolyte membrane such as a perfluorocarbon sulfonic acid membrane, provided with electrode catalyst layers such as platinum group metals on both sides, the electrolyte membrane being disposed between the anode and the cathode; and a porous transport layer disposed between each electrode catalyst layer of the electrolyte membrane and the anode or cathode.

When water is fed to the anode and voltage is applied to the anode in the above PEM water electrolytic device, the water that moves through the porous transport layer on the anode side and reaches the electrode catalyst layer is decomposed to produce oxygen and protons (H⁺). The protons move from the anode to the cathode through the electrolyte membrane on the anode side, and gain electrons in the electrode catalyst layer on the cathode side, and hydrogen is produced on the cathode side. Oxygen, on the other hand, moves through the porous transport layer to a flow path on a discharge side and is discharged out of the device.

In such a PEM water electrolytic device, the space where the porous transport layer is placed, especially on the anode side, is subject to strong acidic and oxidizing conditions, but if the titanium porous body has high corrosion resistance, it can be used well as a porous transport layer in such an extremely harsh environment. As described above, the titanium porous body according to this invention has the desired air permeability, liquid permeability, and electrical conductivity required for the porous transport layer, and can suppress the generation of damage to the electrolyte membrane. Hence, the titanium porous body according to this invention can be suitably used for the porous transport layer on the anode side of the PEM water electrolytic device.

The titanium porous body is being considered for use in the above PEM water electrolytic device as well as in organic electrolytic synthesis using a PEM reactor. In such a device, electrolysis is also performed by passing protons through a proton exchange membrane. The titanium porous body as described herein may be successfully used for organic electrolytic synthesis using the PEM reactor. The titanium porous body according to the embodiment as described herein can be used as the porous transport layer (PTL) on the anode side of the electrolytic device that uses the proton exchange membrane.

### [Examples]

Next, the titanium porous body according to the present invention was experimentally produced, and its performance was confirmed as described below. However, descriptions herein are merely for illustration, and are not intended to be limited thereto.

HDH powder was used as titanium powder, and titanium porous bodies were produced by a paste method or a non-pressure deposition method, as shown in Table **1.** In addition, the titanium powder had a titanium content of 99% by mass or more, a hydrogen content of 0.05% by mass or less, and an oxygen content of about 0.4% by mass. The titanium powder was used after the particle diameter was adjusted by sieving to that shown in Table 1.

In the non-pressure deposition method, no paste was used, and the raw material powder was deposited on a carbon setter without any pressure, and the deposition thickness was adjusted by leveling. It was then heated and sintered at each sintering temperature as shown in Table 1.

In the paste method, the paste was prepared by mixing polyvinyl butyral as an organic binder and isopropyl alcohol as an organic solvent with the titanium powder. The paste contained the respective components in a ratio of 9 g of organic binder and 36 g of organic solvent per 100 g of titanium powder, and did not contain water and a foaming agent. No bubbles were generated in the paste obtained after mixing. In Table 1, the "High Viscosity" means that when the viscosity of the paste prepared by mixing the above titanium powder was measured by the rheometer at a shear rate of 1 (1/s), the viscosity was 2600 mPa·s. On the other hand, "Low Viscosity" means that as a result of mixing with a different device, manner or conditions from those of the above "High Viscosity", the viscosity of the paste measured by the rheometer at a shear rate of 1 (1/s) was 1600 mPa·s. The reason for the low viscosity was thought to be insufficient dissolution of the organic binder in the organic solvent.

The above paste was then applied in the form of a sheet on a release layer PET sheet, which was then dried at 120°C to remove the organic solvent to obtain a formed body which was then removed from the release layer. The formed body was then subjected to a binder removal process by heating at 360°C in an air atmosphere, and then sintered by heating at each sintering temperature as shown in Table 1.

The thickness, peak pore diameter, air permeability, and electrical conductivity of each titanium porous body, which was sheet-shaped, were measured by the previously described method, and the I value was calculated. Table 1 shows the results. The titanium content of each of the titanium porous bodies according to Examples had the titanium content of 97% by mass or more, and the oxygen content of 0.9% by mass or more and 2.0% by mass or less.

**[Table 1]**

| | Production Conditions | | | Titanium Porous Body | | | | |
|---|---|---|---|---|---|---|---|---|
| | Titanium Powder Particle Size [µm] | Production Method | Sintering Temperature [°C] | Thickness [µm] | Peak Pore Diameter [µm] | Air Permeability [µm/ Pa·s] | Electric Conductivity [kS/cm] | I Value |
| Ex. 1 | 10-20 | Paste (High Viscosity) | 775 | 250 | 3.7 | 13 | 4.4 | 4.2 |
| Ex. 2 | 10-20 | Paste (High Viscosity) | 850 | 250 | 3.5 | 12 | 4.8 | 4.7 |
| Ex. 3 | 10-20 | Paste (High Viscosity) | 950 | 250 | 3.3 | 9 | 5.4 | 4.5 |
| Ex. 4 | 10-20 | Paste (High Viscosity) | 775 | 180 | 3.5 | 17 | 3.8 | 5.3 |
| Ex. 5 | 10-20 | Paste (High Viscosity) | 850 | 180 | 3.4 | 16 | 4.3 | 6.0 |
| Ex. 6 | 10-20 | Paste (High Viscosity) | 950 | 180 | 3.3 | 14 | 5.2 | 6.7 |
| Ex. 7 | 10-20 | Paste (High Viscosity) | 775 | 100 | 4.7 | 42 | 3.5 | 6.7 |
| Ex. 8 | 10-20 | Paste (High Viscosity) | 850 | 100 | 4.5 | 41 | 4.2 | 8.5 |
| Ex. 9 | 10-20 | Paste (High Viscosity) | 950 | 100 | 4.2 | 34 | 5.1 | 9.8 |
| Ex. 10 | 10-20 | Paste (High Viscosity) | 775 | 80 | 5.2 | 71 | 3.6 | 9.5 |
| Ex. 11 | 10-20 | Paste (High Viscosity) | 850 | 80 | 5.1 | 68 | 4.1 | 10.7 |
| Ex. 12 | 10-20 | Paste (High Viscosity) | 950 | 80 | 4.8 | 55 | 5.0 | 11.9 |
| Comp. 1 | 10-20 | Paste (High Viscosity) | 775 | 40 | 13.8 | 119 | 3.9 | 2.4 |
| Comp. 2 | 10-20 | Paste (High Viscosity) | 850 | 40 | 13.1 | 101 | 4.3 | 2.5 |
| Comp. 3 | 10-20 | Paste (High Viscosity) | 950 | 40 | 13.5 | 78 | 4.9 | 2.1 |
| Comp. 4 | 10-45 | Paste (High Viscosity) | 775 | 180 | 9.9 | 165 | 2.4 | 4.0 |
| Comp. 5 | 10-45 | Paste (High Viscosity) | 850 | 180 | 9.6 | 142 | 3.1 | 4.8 |
| Comp. 6 | 10-45 | Paste (High Viscosity) | 950 | 180 | 8.6 | 71 | 5.2 | 5.0 |
| Comp. 7 | 10-20 | Paste (Low Viscosity) | 775 | 180 | 6.8 | 48 | 3.9 | 4.0 |
| Comp. 8 | 10-20 | Paste (Low Viscosity) | 850 | 180 | 6.2 | 35 | 3.4 | 3.1 |
| Comp. 9 | 10-20 | Paste (Low Viscosity) | 950 | 180 | 5.5 | 20 | 5.1 | 3.4 |
| Comp. 10 | 10-20 | Non-Pressure Deposition | 950 | 200 | 7.8 | 22 | 5.3 | 1.9 |
| Comp. 11 | 10-20 | Non-Pressure Deposition | 950 | 100 (Target) | Production Failed | | | |

The thickness, peak pore diameter, air permeability, and electrical conductivity of the titanium porous body in each of Examples 1 to 12 had good values, with the I value of 4.0 or more. Thus, the titanium porous body according to each of Examples 1 to 12 has a peak pore diameter with an appropriately size, which is thought to suppress the generation of damage to the surfaces of electrolyte membranes and the like. Further, the titanium porous body according to each of Examples 1 to 12 can exert improved air permeability or liquid permeability and the desirable electrical conductivity.

On the other hand, the titanium porous body according to each of Comparative Examples 1 to 3 had a lower thickness, resulting in a larger peak pore diameter and an I value lower than 4.0. In each of Comparative Examples 4 to 6, the particle size of the titanium powder ranged from 10 µm to 45 µm, and the inclusion of powder having the larger particle size resulted in a larger peak pore diameter, although the I value of the titanium porous body was 4.0 or more. In each of Comparative Examples 7 to 9, the lower viscosity of the paste resulted in titanium porous body having a higher peak pore diameter or a lower I value. Although the peak pore diameter tends to decrease with an increased sintering temperature, the peak pore diameters of the titanium porous bodies according to Comparative Examples 1 to 7 were all somewhat higher.

The titanium porous body according to Comparative Example 10 had a higher peak pore diameter and a lower I value. This would be due to the sparser filling of titanium powder in the non-pressure deposition method than in the paste method. In Comparative Example 11, the target thickness of the titanium porous body was too thin to be produced by leveling of the non-pressure deposition method.

These results suggest that the titanium porous body according to this invention has pores with an appropriate size and may exhibit improved air permeability and liquid permeability as well as desirable electrical conductivity while suppressing damage to the surface of the electrolyte membrane and the like.

## Claims

1. A titanium porous body, wherein:
the titanium porous body has a thickness of 80 µm or more and is sheet-shaped;
a peak pore diameter at a highest peak in a pore diameter distribution showing a relationship between a pore diameter and a volume is 6.5 µm or less; and
an I value is 4.0 or more, as determined from an air permeability, electrical conductivity, and the peak pore diameter by the following equation (1): I = [air permeability (µm/Pa·s) x electrtical conductivity (kS/cm)] / [peak pore diameter (µm)]2 (1).

2. The titanium porous body according to claim 1, wherein the peak pore diameter is 1.5 µm or more and 6.5 µm or less.

3. The titanium porous body according to claim 1 or 2, wherein the thickness is 80 µm or more and 400um or less.

4. The titanium porous body according to any one of claims 1 to 3, wherein the titanium porous body has a titanium content of 97% by mass or more, and an oxygen content of 0.6% by mass or more and 2.0% by mass or less.

5. The titanium porous body according to claim 4, wherein the titanium content is 98% by mass or more.

6. The titanium porous body according to claim 4 or 5, wherein the oxygen content is 0.9% by mass or more and 2.0% by mass or less.

7. The titanium porous body according to any one of claims 1 to 6, wherein the thickness is 100 µm or more and 350 µm or less.

8. The titanium porous body according to any one of claims 1 to 7, wherein the peak pore diameter is 2.5 µm or more and 5.5 µm or less.
